Europäisches Patentamt

European Patent Office

Office européen des brevets

(11) Numéro de publication: **0 020 931**
**B1**

(12) **FASCICULE DE BREVET EUROPEEN**

(45) Date de publication du fascicule du brevet: **10.10.84**

(51) Int. Cl.³: **G 06 F 9/46,** G 06 F 9/38, G 06 F 15/06

(21) Numéro de dépôt: **80102237.7**

(22) Date de dépôt: **25.04.80**

(54) Dispositif exécutant des opérations d'interruption de programme pour processeur du type à appel anticipé des instructions.

(30) Priorité: **21.06.79 US 50888**
**21.06.79 US 50570**

(43) Date de publication de la demande:
**07.01.81 Bulletin 81/01**

(45) Mention de la délivrance du brevet:
**10.10.84 Bulletin 84/41**

(84) Etats contractants désignés:
**DE FR GB**

(56) Documents cités:
**THE BELL SYSTEM TECHNICAL JOURNAL, vol. XLIII, no. 5, partie 1, septembre 1964 New York US HARR:" Organization of No. 1 ESS central processor", pages 1845-1922**
**IBM TECHNICAL DISCLOSURE BULLETIN, vol. 21, no. 5, octobre 1978, New York US HASLAM: "Extended addressing on stack machine", pages 2073-2074**

(73) Titulaire: **International Business Machines Corporation**
**Old Orchard Road**
**Armonk, N.Y. 10504 (US)**

(72) Inventeur: **Bliss, Floyd, Russell**
**840 Berklystreet**
**Boca Raton Florida 33431 (US)**
Inventeur: **Fairchild, Peter Tappen**
**Wylie Bridge Road**
**Woodstock Georgia 30188 (US)**
Inventeur: **Leininger, Joel Calvin**
**601 Northwest 7th Street**
**Boca Raton Florida 33432 (US)**

(74) Mandataire: **Bonneau, Gérard**
**Compagnie IBM France Département de Propriété Industrielle**
**F-06610 La Gaude (FR)**

Courier Press, Leamington Spa, England.

EP 0 020 931 B1

**0 020 931**

(56) Documents cités:

IBM TECHNICAL DISCLOSURE BULLETIN, vol. 8, no. 1, juin 1965 New York US BONEVAC: "Automatic interrupt request restart", pages 52-53
COMPUTER DESIGN, vol. 17, no. 1 janvier 1977 Concord US VITTERA: "Handling multilevel subroutines and interrupts in microprocomputers", pages 109-115

**Description**

Domaine technique auquel l'invention se rapporte

La presente invention concerne les dispositifs d'execution d'interruptions pour systèmes de traitement de données comportant un processeur du type à appel anticipé des instructions; plus particulièrement, ces dispositifs permettent le traitement efficace des interruptions consécutivement aux instructions d'accès en mémoire et de branchement, tout en ne demandant qu'un nombre limité de circuits d'exécution.

Etat de la technique antérieure

Il existe des processeurs à appel anticipé des instructions, dans lesquels une instructions donnée est extraite de la mémoire pendant l'exécution de l'instruction qui la précède dans le programme en cours d'exécution. Un processeur de ce type est par exemple décrit dans l'ouvrage de J. P. Meinadier, intitulé "Structure et Fonctionnement des Ordinateurs" (pages 175 et 176).

Dans le système décrit dans "The Bell System Technical Journal" vol 43 N° 5 de Septembre 1964, pages 1845—1922, les interruptions émanant d'une source externe sont généralement masquées ou ne peuvent pas être prises en charge pendant l'exécution de certaines instructions du programme. Les instructions de programme comprennent des instructions arithmétiques et logiques, des instructions d'entrée/sortie (E/S), des instructions de lecture et d'écriture de la mémoire et des instructions de branchement. Dans les processeurs à appel anticipé des instructions de l'art antérieur, le traitement des interruptions est interdit pendant l'exécution d'instructions de lecture et d'écriture de la mémoire ou d'instructions de branchement. Dans les systèmes de l'art antérieur, lorsqu'une demande d'interruption est reçue par le processeur, un programme d'interruption est généralement exécuté pour déterminer la cause de l'interruption et pour prendre la demande en charge.

Il est également connu, lors de l'execution d'un programme, d'utiliser des sous-programmes pouvant être emboîtés, auquel cas le programme appelle, au cours de son exécution, un premier sous-programme, appelant lui-même un deuxième sous-programme et ainsi de suite. Une telle structure est par exemple décrite dans l'ouvrage de R. K. Richards intitulé: "Electronic Digital Systems" pages 185—186.

Dans les systèmes du type de celui décrit dans "Computer Design", vol 17, n°, Janvier 1977, pages 109 à 115, comportant des registres de liaison de branchement pour emmagasiner des adresses d'instructions ou de données au cours de l'exécution des sous- programmes emboîtés, il est prévu des registres de liaison supplémentaires pendant l'exécution de programmes d'interruption.

Appréciation de l'état de la technique

Dans les systèmes connus à appel anticipé des instructions, le traitement des interruptions provoque une dégradation des performances du processeur. Un tel traitement exige l'addition de circuits et l'exécution d'opérations se traduisant par une augmentation du coût et de la complexité du système et entraînant une utilisation peu efficace de ses circuits.

Il serait donc souhaitable qu'un dispositif capable d'assurer un traitement efficace des interruptions puisse être utilisé avec un processeur du type à appel anticipé des instructions. Il serait également souhaitable de pouvoir utiliser, dans un processeur de ce type, un dispositif de traitement des interruptions dans lequel des données nécessaires à la reprise de l'exécution d'un programme interrompu seraient sauvegardées puis restituées au processeur sans nécessiter ni l'adjonction de circuits supplémentaires ni l'emploi de programmes peu efficaces.

Il serait enfin souhaitable de pouvoir utiliser, au cours de l'exécution d'une programme d'interruption pouvant comporter des sous-programmes emboîtés, les registres de liaison utilisés pendant l'exécution normale du programme principal.

Exposé de l'invention

La présente invention permet de réaliser un dispositif exécutant des opérations d'interruption de programme dans un système de traitement de données comportant une mémoire permettant d'emmagasiner des données et des instructions, un processeur fonctionnant par cycles d'instructions pour effectuer les opérations déterminées par les instructions d'un programme, des circuits permettant de traiter les demandes d'interruption en provenance de dispositifs périphériques reçues par le processeur, ledit système fonctionnant dans le mode dit d'appel anticipé des instructions dans lequel une instruction donnée est extraite de la mémoire pendant l'éxécution de l'instruction qui la précède dans le programme à exécuter.

Le dispositif comprend un registre d'adresse d'instruction connecté à la mémoire et contenant l'adresse de la prochaine instruction qui doit faire l'objet d'un appel anticipé dans une suite d'instructions à exécuter, un registre d'adresse de mémoire couplé au registre d'adresse d'instruction ainsi qu'à la mémoire et destiné à charger l'adresse de la prochaine instruction durant l'exécution de l'instruction en cours, une première bascule destinée à recevoir et à emmagasiner une demande d'interruption en provenance d'un des dispositifs périphériques, une seconde bascule connectée à la sortie de la première bascule et à la mémoire et commandée par des instructions de manière à autoriser ou à interdire les demandes d'interruption emmagasinées dans la première bascule;

Un registre d'interruption pour emmagasiner, lorqu'une demande d'interruption a été acceptée, l'adresse contenue dans le registre d'adresse d'instruction, des informations d'état concernant l'unité arithmétique et logique du processeur ainsi que des informations concernant les pages de données en mémoire et des moyens de restauration pour restaurer les informations d'état de pages et l'adresse d'instuction en transmettant le contenu du registre d'interruption au processeur à la fin de l'exécution des opérations d'interruption de façon à restaurer le processeur dans l'état qu'il avait au moment où l'interruption a été acceptée afin de permettre au processeur de reprendre l'exécution du programme au point où il a été interrompu.

Le dispositif selon l'invention est caractérisé en ce qu'il contient en outre des registres de liaison connectés au registre d'adresse d'instruction pour emmagasiner les valeurs se trouvant dans ce dernier lorsqu'une demande d'interruption est reçue en provenance d'un des dispositifs périphériques, des moyens d'interruption couplés aux première et seconde bascules afin d'interdire le chargement dans le registre d'adresse d'instruction de l'adresse de la prochaine instruction devant faire l'objet d'un appel anticipé, pendant le premier cycle consécutif à la prise en compte d'une demande d'interruption dans la première bascule, des moyens couplés aux première et seconde bascules et permettant, en réponse à une opération de branchement donnant lieu à branchement résultant de l'instruction se trouvant dans le registre d'adresse d'instruction, d'interdire le fonctionnement des moyens d'interruption jusqu'à ce que l'instruction de branchement ait été exécutée, et des moyens couplés aux première et seconde bascules et permettant, en réponse à une opération d'accès à la mémoire, d'interdire le fonctionnement des moyens d'interruption jusqu'à la fin de l'exécution de l'opération d'accès en mémoire.

Brève description des figures

La Figure 1 est un schéma synoptique d'un système de traitement de données numériques incorporant le dispositif d'interruption de la présente invention.

La Figure 2 est un schéma synoptique du circuit de commande logique de traitement des interruptions qui est représenté sous la forme d'un bloc (référencé 140) sur la Figure 1.

La Figure 3 est un schéma synotique du circuit dit de commande de branchement avec liaison et de retour de contrôle représenté sous la forme d'un bloc (référencé 240) sur la Figure 2.

La Figure 4 est un diagramme des temps qui permet de résumer le fonctionnement d'un processeur du type à appel anticipé des instructions.

La Figure 5 est un diagramme des temps qui résume le fonctionnement du processeur lorsqu'un cycle de non-opération est exécuté.

La Figure 6 est un diagramme des temps qui résume l'exécution d'une instruction d'appel de données.

La Figure 7 est un diagramme des temps qui résume l'exécution d'une instruction d'emmagasinage de données.

Description de l'invention

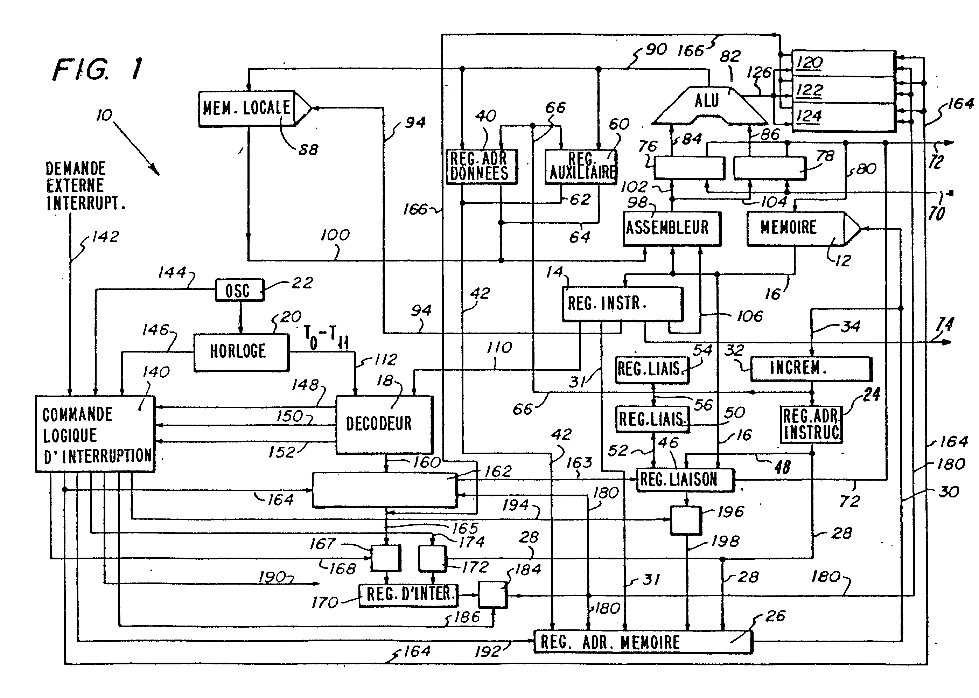

On a représenté sur la Figure 1 les principaux composants d'un processeur du type à appel anticipé des instructions ainsi que la façon dont ils sont interconnectés. Ce processeur peut être constitué par un microprocesseur, mais d'autres modes de réalisation sont possibles. Tous ces modes présentent toutefois la caractéristique commune que les circuits de commande de séquence permettent, pendant l'exécution d'une instruction, l'appel en mémoire de l'instruction suivante du programme à exécuter. A certains détails près, ce processeur est analogue à celui décrit sur la Figure 17 du brevet des E.U.A. No. 4 038 642. Le processeur est désigné sur la Figure 1 par le numéro de référence 10 et comprend une mémoire principale 12 dans laquelle sont emmagasinées les instructions du programme et les données. Un programme est exécuté en lisant ces instruction dans la mémoire 12 et en les chargeant, une à la fois, dans un registre d'instruction 14 par l'intermédiaire d'une connexion d'acheminement de signaux 16.

Le processeur 10 est commandé par l'introduction d'instructions composées de seize bits dans le registre d'instruction 14, les 3 bits aux positions zéro à deux définissant le type d'instruction, huit types d'instructions pouvant ainsi être définis. Les types 0, 1 et 2 correspondent aux instructions arithmétiques et logiques, le type 3 correspond aux instructions d'entrée/sortie, les types 4 et 5 correspondent aux instructions de lecture et d'écriture de la mémoire, lesquelles nécessitent deux cycles, et les types 6 et 7 correspondent aux instructions de branchement. La partie de l'instruction réservée au code d'instruction est utilisée par un décodeur 18 pour engendrer les signaux de commande nécessaires à l'intérieur du processeur 10. Un générateur 20, commandé par un oscillateur 22, fournit des signaux d'horloge au décodeur 18.

Exception faite de l'adresse de l'instruction suivant une instruction de branchement (ou une instruction analogue) quand un branchement est à effectuer, l'adresse de l'instruction consécutive suivante est contenue dans un registre d'adresse d'instruction 24. Pendant l'exécution de l'instruction en cours contenue dans le registre d'instructions 14, l'adresse contenue dans le registre 24 est chargée dans un registre de mémoire 26 par l'intermédiaire d'une connexion 28 afin d'adresser l'instruction suivante dans la mémoire principale 12 par l'intermédiaire de la connexion 30. Le registre d'instruction 14 est couplé au registre 26 par l'intermédiaire d'une liaison 31. L'adresse contenue dans le registre 26 est transférée à la mémoire principale 12 pendant l'exécution de l'instruction en cours de manière à permettre un appel anticipé de l'instruction suivante. En d'autres termes, l'instruction suivante est appelée pendant le cycle au cours duquel l'instruction en cours est exécutée. Pendant son transfert à la mémoire principale 12 par l'intermédiaire de la connexion 30, l'adresse contenue dans le registre 26 est incrémentée par un dispositif d'incrémentation 32 par l'intermédiaire d'une liaison 34. L'adresse ainsi incrémentée est chargée dans le registre 24 et constitue l'adresse de l'instruction suivante.

Si une instruction de branchement (ou une instruction analogue) devant être exécutée est chargée dans le registre d'instruction 14, une adresse de branchement est fournie par le registre 14 ou par un registre adressable d'adresse de données 40 ou encore par un registre adressable auxiliaire d'adresse de données 60, au registre 26, par l'intermédiaire d'une connexion 42 afin de permettre d'appeler l'instruction suivant l'instruction de branchement. Si l'on désire revenir ultérieurement au point où le branchement a lieu, on procède au chargement du contenu du registre 24 dans un registre de liaison 46, par l'intermédiaire d'une liaison 48, de manière à permettre de revenir ulérieurement à l'instruction suivant consécutive au point du programme depuis lequel le branchement a été effectué. Un deuxième registre de liaison 50 est connecté par l'intermédiaire d'une liaison 52 au registre 46. De même, un troisième registre de liaison 54 est connecté au registre 50 par l'intermédiaire d'une liaison 56. Les registres auxiliaires 50 et 54 permettent d'emmagasiner des adresses de branchement successives.

Pour lire ou écrire des données dans la mémoire principale 12, l'adresse d'emmagasinage est obtenue à partir du registre 40 ou depuis le registre 60 par l'intermédiaire des liaisons 62 et 64. Cette adresse est chargée dans le registre 26 par l'intermédiaire de la liaison 42. Simultanément, cette adresse est incrémentée par le dispositif d'incrémentation 32 par l'intermédiaire de la liaison 66 et peut ensuite être retransmise au registre 40 ou 60 dont elle a été obtenue. Les registres 40 et 60 assurent donc, en ce qui concerne les données, la même fonction que celle qui est assurée, en ce qui concerne les instructions, par le registre 24.

Le processeur 10 communique avec des sources externes de données par l'intermédiaire de trois bus primaires, qui sont le bus d'entrée de données 70, le bus de sortie de données 72 et le bus de sortie d'adresses 74. Ce dernier fournit un ensemble de bits qui provient du registre d'instruction 14 et qui permet de choisir le registre externe ou autre élément du circuit dont les données doivent être transmises par l'intermédiaire du bus 70 ou qui doit recevoir les données présentes sur le bus 72.

Les données reçues du bus 70 sont introduites dans un registre 76 et dans un registre 78, et peuvent ensuite être directement appliquées à la mémoire principale 12 par l'intermédiaire d'une liaison 80, ou à une unité arithmétique et logique 82 par l'intermédiaire de lignes 84 et 86, afin d'être transmises à une mémoire locale 88 par l'intermédiaire d'une liaison 90. La mémoire locale 88 comporte un ensemble de registres adressables dans lesquels les données ou opérandes peuvent être temporairement conservés pendant leur traitement par le processeur 10. La mémoire locale 88 est adressée au moyen d'un ou plusieurs champs d'adresse appropriés que comporte l'instruction contenue dans le registre 14 par l'intermédiaire d'une liaison 94. Dans le cas d'une opération typique dite de registre à registre, l'instruction comprend deux champs permettant d'adresser deux registres de la mémoire locale, un pour chacun des deux opérandes auxquels l'opération fait appel.

Les données ou autres opérandes contenus dans la mémoire locale 88 sont lus par l'intermédiaire d'un assembleur 98 et d'une connexion 100 et sont chargés dans l'un ou l'autre des registres 76 et 78 par l'intermédiaire des connexions 102 et 104. Le registre d'instructions 14 est couplé à l'assembleur 98 par l'intermédiaire d'une connexion 106. Dans le cas d'un instruction arithmétique d'addition, par exemple, le contenu du registre 76 est ajouté à celui du registre 78 par l'unité 82 et le résultat est chargé dans la mémoire locale 88. Le contenu des registres 76 et 78 peut également, par l'intermédiaire d'une instruction appropriée dans le registre 14, être transféré au bus de sortie de données 72 et, par lui, à un registre appropré auquel le processeur 10 est connecté. Ou encore, le contenu des registres 76 et 78 peut être transféré par l'intermédiaire du bus 80 à la mémoire principale 12 au moyen d'une instruction appropriée.

Lorsqu'elles sont lues dans la mémoire principale 12, les données sont transmises par l'intermédiaire de l'assembleur 98 aux registres 76 et 78. Elles sont ensuite appliquées par l'intermédiaire de l'unité 82, à la mémoire locale 88. Elles peuvent également être appliquées au bus de sortie de données 72 depuis les registres 76 et 78.

Chaque instruction chargée dans le registre 14 comprend un champ de code d'opération. Le contenu de ce champ est appliqué au décodeur 18 par l'intermédiaire d'une liaison 110. Le décodeur 18 reçoit également des signaux d'horloge $T_0$ à $T_{11}$ provenant du générateur 20 par l'intermédiaire de la liaison 112. Le décodeur 18 décode le contenu de ce champ et engendre les signaux de commande requis aux instants voulus à l'intention des diverses portes de commande de circulation des données et des registres appropriés, de manière à obtenir l'acheminement désiré des données ou opérandes afférents à cette instruction particulière dans le processeur 10. S'il y a lieu, le décodeur 18 transmet également à l'unité 82 des signaux appropriés en vertu desquels cette unité effectuera une addition ou une soustraction ou tout aure opération logique.

Des bascules détat 120, 122 et 124 sont connectées à l'unité 82 par l'intermédiaire d'une liaison 126. Ces bascules rendent possible l'addition de nombres représentés par plus de quatre bits et pour laquelle un report est nécessaire. Elles constituent également un mécanisme permettant de tester le résultat fourni par l'unité 82 avec des instructions de branchement.

Le décodeur 18 applique aux circuits 140 de commande logique d'interruption des signaux d'instruction de branchement avec liaison par l'intermédiaire d'une liaison 148, des signaux d'instruction de retour par l'intermédiaire d'une liaison 150 et des signaux d'instruction d'autorisation d'interruption par l'intermédiaire d'une liaison 152. Le décodeur 18 engendre des signaux d'instruction qui sont transmis par l'intermédiaire d'une liaison 160 à des bascules de page 162 correspondant à des bits D, I, $X_1$, $X_2$, $X_3$, $X_4$ et $X_5$. Ces bascules sont prévues pour augmenter les possibilités d'adressage de la mémoire locale et/ou de la mémoire principale. Elles peuvent être positionnées par des instructions spéciales par l'intermédiaire de la liaison 160. Les bascules 162 appliquent un signal de sortie au registre de liaison 46 par l'intermédiaire d'une liaison 163.

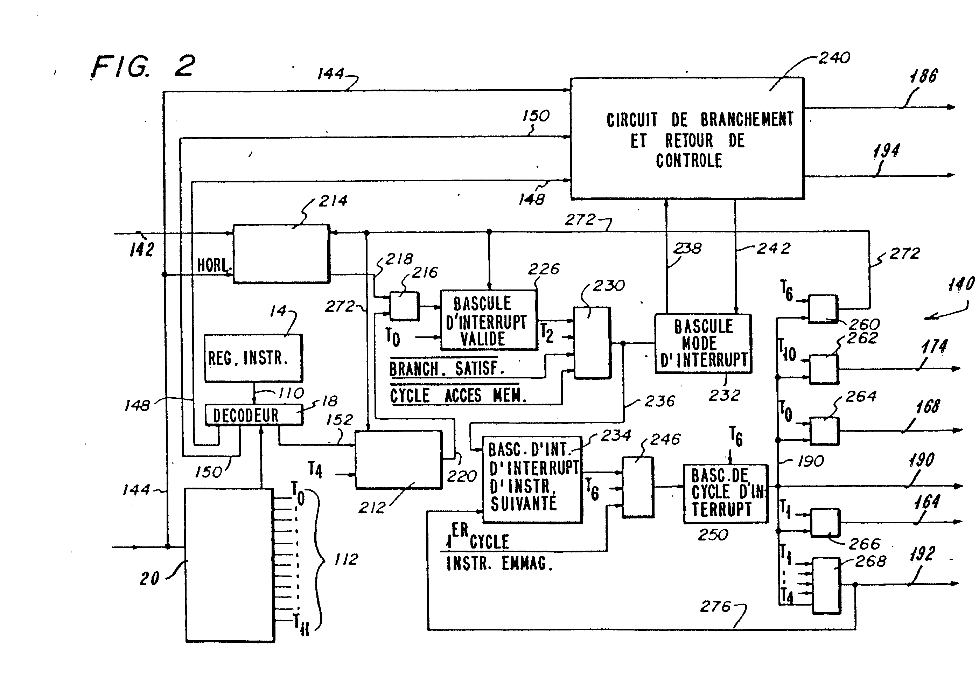

Le circuit 140, qui sera décrit plus loin en relation avec la Figure 2, constitue une caractéristique importante de la présente invention. Le circuit 140 reçoit par l'intermédiaire d'une liaison 142 une demande d'interruption externe émanant de l'une des unités périphériques (non représentées) associées au processeur 10. Par ailleurs, le circuit 140 reçoit une entrée provenant de l'oscillateur 32 et une entrée provenant du générateur 20 de signaux d'horloge, par l'intermédiaire de liaisons 144 et 146, respectivement.

Les sorties des bascules 162 relatives aux pages et des bascules d'état 120, 122 et 124 de l'unité 82 sont appliquées, par l'intermédiaire de liaisons 165 et 166, à un circuit ET 167, qui charge les bits relatifs aux pages et les bits d'état relatifs à l'unité 82 dans un registre d'interruption 170 sous le contrôle du circuit de commande d'interruption 140 par l'intermédiaire d'une liaison 168. Le circuit 140 engendre ensuite un signal qui est appliqué par l'intermédiaire d'une liaison 164 aux bascules 162, 120, 122 et 124 afin de les restaurer. Le circuit 140 engendre également un signal d'acceptation d'interruption par l'intermédiaire d'une liaison 190 et un signal qui est appliqué par l'intermédiaire d'une liaison 192 au registre d'adresse de mémoire 26 afin de le charger avec une valeur de position de mémoire prédéterminée permettant d'adresser une séquence d'interruption. Cette valeur pourra être par exemple 008.

La sortie du registre d'adresse d'instruction 24 est appliquée par l'intermédiaire de la liaison 28 à un circuit ET 172 qui reçoit également, par l'intermédiaire de la liaison 164, un signal engendré par le circuit 140 pour provoquer l'application du contenu du registre 24 au registre d'interruption 170.

Une fois que le programme d'interruption a été exécute et que le processeur 10 a rendu le contrôle des opérations au programme principal, une instruction dite de transfert de contrôle provoque l'application de la sortie du registre 170 à un circuit ET 184, qui reçoit également comme entrée, par l'intermédiaire d'une liaison 186, un signal dit de restauration d'état de préinterruption qui est engendré par le circuit 140. La sortie du circuit ET 184 a pour effet de remettre, par l'intermédiaire d'une liaison 180, le contenu des bascules 162, 120, 122 et 124 ainsi que celui du registre 26 aux valeurs qu'ils avaient avant l'interruption. Le circuit 140 engendre également un signal dit de blocage de porte qui est appliqué, par l'intermédiaire d'une liaison 194, au circuit ET 196 de telle sorte que le contenu du registre de liaison 46 ne puisse pas être transféré au registre 26 par l'intermédiaire d'une liaison 198.

On se reportera à présent à la Figure 2, sur laquelle les composants analogues ou identiques à ceux déjà décrits portent les mêmes numéros de référence que précédemment, et qui représente le circuit de commande d'interruption 140. Le signal d'autorisation d'interruption fourni, ainsi qu'on l'a précédemment indiqué, par le registre d'instruction 14 et le décodeur 18, est appliqué par l'intermédiaire de la ligne 152 à une bascule 212, qui est de ce fait enclenchée. La bascule 212 reçoit également le signal d'horloge $T_4$ du générateur 20. Par ailleurs, le signal de demande d'interruption externe est appliqué à une bascule 214 par l'intermédiaire de la ligne 142, de même que le signal d'horloge engendré par l'oscillateur 22 (Figure 1) et transmis par l'intermédiaire de la ligne 144. La bascule 214 peut se composer, par exemple, d'un flip-flop qui est mis en service par le front avant de l'impulsion qui lui est appliquée et qui ne possède pas de capacité de restauration interne.

La sortie de la bascule 214 et celle de la bascule 212 sont appliquées à un circuit ET 216 par l'intermédiaire de lignes 218 et 220. La bascule 214 est restaurée par un signal de restauration qui sera ultérieurement décrit et n'est pas automatiquement restaurée en l'absence du signal de demande d'interruption externe. Si la bascule 212 n'est pas enclenchée lors de l'apparition d'un signal de demande d'interruption externe destiné à enclencher la bascule 214, cette dernière ne change pas d'état jusqu'à ce que le signal d'autorisation d'interruption soit engendré afin d'enclencher la bascule 212.

La sortie du circuit ET 216 est appliquée à une bascule 226 qui est dite d'interruption valide et qui reçoit également le signal d'horloge $T_0$. La sortie du circuit ET 216 a également pour effet de provoquer la remise en route de l'horloge du processeur 10 si celle-ci avait cessé de fonctionner lors d'une opération antérieure.

La sortie de la bascule 226 est appliquée à un circuit ET 230, qui reçoit en outre le signal d'horloge $T_2$. Si le processeur 10 n'est pas en train d'effectuer une opération de branchement effectif ou un cycle d'accès à la mémoire, un signal dit de non-branchement et un signal dit d'absence de cycle d'accès à la mémoire sont appliqués au circuit ET 230. La sortie de ce dernier provoque alors l'enclenchement d'une bascule 232 dite de mode d'interruption et d'une bascule 234 dite d'interruption d'instruction suivante et de mise à jour du registre 24, par l'intermédiaire d'une ligne 236. Les instructions de type 4 et 5 du processeur 10 (relatives à des opérations de lecture et d'écriture de la mémoire) nécessitent à la fois un appel d'instruction et un appel de données en mémoire. Si le processeur 10 n'est pas en train d'effectuer un cycle d'accès à la mémoire ou une opération de branchement satisfaisant, les bascules 232 et 234 seront enclenchées lors de l'application du signal d'horloge $T_2$, ce qui provoquera la perte de l'instruction que l'on appelle pendant l'exécution de l'instruction en cours, sans pour autant que le registre d'adresse d'instruction 24 cesse de désigner l'instruction suivante.

La sortie de la bascule 232 est appliquée par l'intermédiaire d'une ligne 238 à un circuit 240 dit de branchement avec liaison et de retour de contrôle. Lorsque le programme d'interruption a été exécuté, le circuit 240 engendre le signal destiné a restaurer l'état de pré-interruption et le signal destiné à empêcher le transfert du contenu du registre de liaison 46 au registre 26, ces signaux étant respectivement transmis sur les liaisons 186 et 194.

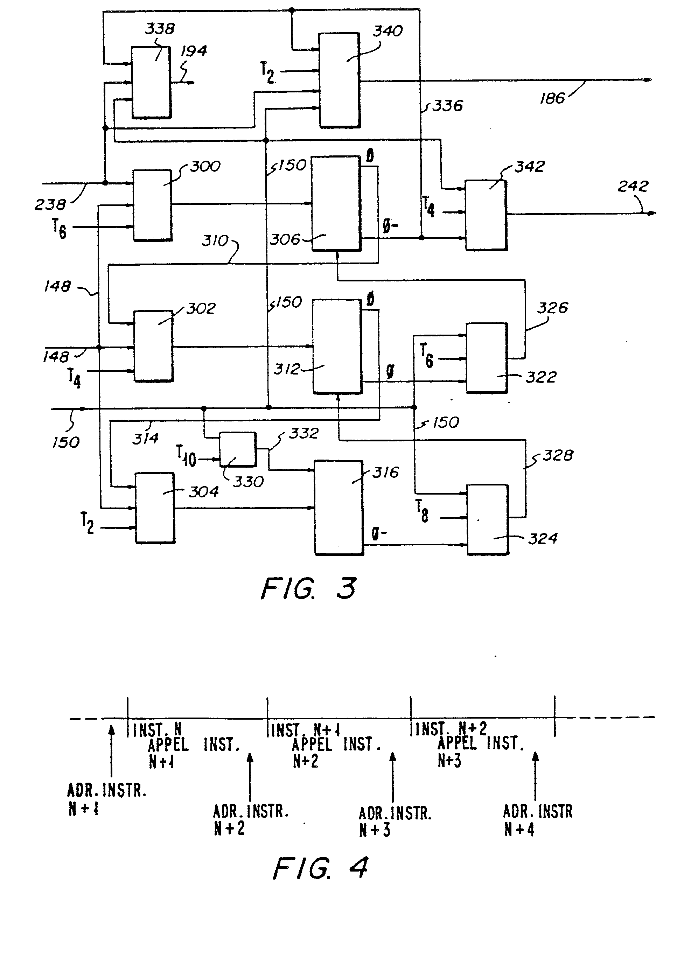

Le circuit 240 engendre également un signal de restauration qui est appliqué par l'intermédiaire d'une ligne 242 à la bascule 232. Le circuit 240 sera décrit plus loin à l'aide de la Figure 3.

La sortie de la bascule 234 est appliquée à un circuit ET 246, qui reçoit également le signal d'horloge $T_8$. Si le processeur 10 n'est pas en train d'exécuter le premier cycle d'une opération de mise en mémoire, un signal dit de premier cycle d'instruction de mise en mémoire est appliqué au circuit ET 246. La sortie de ce dernier provoque alors l'enclenchement d'une bascule 250, dite de cycle d'interruption, qui reçoit également le signal d'horloge $T_8$. Si le processeur 10 est en train d'effectuer le premier cycle d'une opération de mise en mémoire, ce cycle doit être exécuté et de ce fait la bascule 250 ne sera pas enclenchée. Cette bascule engendre un signal dit d'acceptation d'interruption qui est transmis par l'intermédiaire de la ligne 190 aux circuits de contrôle externes ainsi qu'aux circuits ET 260, 262, 264, 266 et 268.

Le circuit ET 260 reçoit le signal d'horloge $T_6$ et engendre un signal de restauration qui est appliqué par l'intermédiaire d'une ligne 272 aux bascules 226, 214 et 212. Cette dernière est restaurée immédiatement après avoir reçu le signal d'autorisation d'interruption. Lorsqu'il reçoit le signal d'horloge $T_{10}$, le circuit ET 262 engendre le signal qui est transmis sur la ligne 174 pour provoquer le chargement du contenu du registre 24 dans le registre 170 (voir Figure 1). Lors de l'apparition du signal d'horloge $T_0$, le circuit Et 264 engendre le signal qui est transmis sur la ligne 168 et provoque le chargement des bits relatifs aux pages et des bits d'état dans le registre 170. Lors de l'apparition du signal d'horloge T1, le circuit ET 266 engendre le signal qui est transmis sur la ligne 164 afin de restaurer les bascules relatives aux pages et aux bits d'état (bascules 162, 120, 122 et 124, Figure 1). Lors de l'apparition des signaux d'horloge $T_1$ à $T_4$, le circuit ET 268 met la valeur contenue dans le registre 26 (Figure 1) à celle de la position 008 de la mémoire principale 12 par l'intermédiaire de la ligne 192. Le signal de sortie de cette bascule est d'autre part appliqué par l'intermédiaire d'une ligne 276 à la bascule 234.

On a représenté sur la Figure 3 le circuit de commande de branchement avec liaison et de retour de contrôle 240 de la Figure 2. La sortie de la bascule 232 de la Figure 2 est appliquée par l'intermédiaire d'une ligne 238 à un circuit ET 300. Les signaux des instructions de branchement avec liaison émanant du décodeur 18 de la Figure 1 sont appliquées au circuit ET 300 ainsi qu'aux circuits ET 302 et 304 par l'intermédiaire de la ligne 148. La première fois qu'une instruction de branchement avec liaison est engendrée parès une demande d'interruption et à l'instant d'horloge $T_6$, le circuit 300 fournit une sortie qui enclenche une bascule de liaison 306, dont la sortie est appliquée par l'intermédiaire d'une ligne 310 au circuit ET 302.

A l'instant d'horloge T4, si une seconde instruction de branchement avec liaison est engendrée par le décodeur 18 de la Figure 1, le circuit ET 302 fournit une sortie qui a pour effet d'enclencher une bascule de liaison 312. La sortie de cette dernière est appliquée par l'intermédiaire d'une ligne 314 au circuit ET 304. A l'instant d'horloge T2, si une troisième instruction de branchement avec liaison est engendrée par le décodeur 18, le circuit ET 304 fournit une sortie qui permet d'enclencher une bascule de liaison 316. Avant l'enclenchement de la bascule 306, aux instants d'horloge T2 et T4, les bascules 312 et 316 ne sont pas enclenchées étant donné que leur enclenchement est fonction de l'enclenchement antérieur de la bascule 306. Lorsqu'elles sont enclenchées, les bascules 306, 312 et 316 indiquent le nombre de registres de liaison 46, 50 et 54 (Figure 1) qui ont été utilisées dans le programme d'interruption.

Lorsqu'une instruction de retour de contrôle est engendrée par le décodeur 18 et transmise sur la liaison 150 de la Figure 1, on lit le contenu des bascules 306, 312 et 316. A l'instant d'horloge T2, si la bascule de mode d'interruption 232 (Figure 2) est enclenchée, ce qui est indiqué par l'apparition sur la ligne 238 d'un signal appliqué à un circuit ET 340, et si la bascule 306 n'a pas été rendue active, ce qui est indiqué par le fait que sa sortie est appliquée par l'intermédiaire d'une ligne 336 au circuit ET 340, et enfin si ce dernier reçoit par l'intermédiaire de la ligne 150 le signal de retour de contrôle, le circuit ET 340 fournit sur la ligne 186 le signal de restauration d'état de pré-interruption. A l'instant d'horloge T4, si les bascules 306, 312 et 316 ne sont pas rendues actives, un circuit ET 342 fournit sur la ligne 242 le signal de restauration de la bascule de mode d'interruption 232 (Figure 2).

Afin de restaurer les bascules 306, 312 et 316, le signal de retour de contrôle engendré par le décodeur 18 sur la ligne 150 est appliqué aux circuits ET 322, 324 et 330. A l'instant d'horloge T6, si la bascule 312 n'est pas enclenchée, indiquant ainsi que les registres 50 et 54 de la Figure 1 ne sont pas alors utilisés par le programme d'interruption, le circuit ET 322 fournit sur une ligne 326 un signal de restauration de la bascule 306. A l'instant d'horloge T8, et si la bascule 316 n'a pas été précédemment enclenchée, indiquant ainsi que le registre 54 de la Figure 1 n'est pas utilisé dans le même temps par le programme d'interruption, le circuit ET 324 fournit une sortie qui permet de restaurer la bascule 312 par l'intermédiaire d'une ligne 328. A l'instant d'horloge T10 l'application, par l'intermédiaire de la ligne 150 du signal de retour de contrôle à un circuit ET 330, provoque la génération par ce dernier d'un signal de restauration de la bascule 316, qui est appliqué à cette dernière par l'intermédiaire d'une ligne 332. La sortie de la bascule 306 est appliquée par l'intermédiaire de la ligne 336 à un circuit ET 338, qui reçoit également la sortie de la bascule de mode d'interruption 232 (Figure 2) par l'intermédiaire de la ligne 238 ainsi que le signal de retour de contrôle par l'intermédiaire de la ligne 150. Le circuit ET 338, si la bascule 306 est restaurée, fournit sur la ligne 194 le signal destiné à interdire le transfert du contenu du registre 46 au registre 26.

Il ressort de ce qui précède que le circuit 240 de la Figure 3 permet de compter le nombre d'instructions de branchement avec liaison qui sont reçues en enclenchement les bascules 306, 312 et 316. Ces bascules seront restaurées lors de la réception d'instructions de retour de contrôle ultérieures. On peut de ce fait exécuter un nombre quelconque d'instructions de branchement avec liaison et de retour de contrôle. Le circuit 240 compte le nombre de bascules 306, 312 et 316 qui sont rendues actives tant que le nombre d'instructions de branchement avec liaison n'est pas supérieur de trois unités au nombre d'instructions de retour de contrôle. Lorsque le nombre d'instructions de branchement avec liaison est égal au nombre d'instructions de retour de contrôle, les registres de liaison 46, 50 et 54 (Figure 1) peuvent de nouveau être chargés au moyen des données emmagasinées dans la mémoire principale 12 au début de l'exécution du programme d'interruption. Une fois que les bascules 306, 312 et 316 sont restaurées, l'instruction de retour de contrôle suivante provoquera le transfert du contenu du registre 170 de la Figure 1 aux bascules 162 relatives aux pages, aux bascules 120, 122 et 124 contenant les bits d'état de l'unité arithmétique et logique et au registre 26 (Figure 1) du processeur 10 où ces informations se trouvaient initialement. Le processeur 10 reprend alors le traitement au point du programme où l'interruption s'est produite. Les registres 46, 50 et 54 peuvent donc être de nouveau utilisés par le programme. Le chargement des registres 46, 50 et 54 n'affecte pas le fonctionnement du circuit 240, qui compte le nombre d'instructions de branchement avec liaison et de retour de contrôle pendant l'exécution du programme d'interruption.

En résume, lorsqu'une demande d'interruption est transmise par l'une des unités périphériques associées au processeur 10, au moyen du signal de demande d'interruption externe, le contenu du registre 24 ainsi que les informations emmagasinées dans les bascules 162 relatives aux pages et les bits d'état de l'unité arithmétique et logique emmagasinés dans les bascules 120, 122 et 124 sont sauvegardés et chargés dans le registre d'interruption 170 (Figure 1). Etant donné qu'il est souhaitable de pouvoir exécuter les instructions de branchement avec liaison même lorsqu'on se trouve dans le mode d'interruption ou pendant l'exécution du programme d'interruption, le contenu des registres de liaison 46, 50 et 54 doit être sauvegardé. Ce résultat peut être obtenu, par exemple en exécutant des instructions de mise en mémoire du contenu de ces registres.

Lors de la reéception d'une demande d'interruption, la bascule de mode d'interruption 232 de la Figure 2 est enclenchée. Elle reste enclenchée jusqu'à ce que le contenu du registre d'interruption 170 ait été transféré aux registres et aux bascules du processuer 10 dans lesquels il se trouvait avant la réception de la demande d'interruption. Lorsque les données contenues dans un ou plusieurs des registres de liaison 46, 50, 54 sont emmagasinées dans la mémoire principale 12 de la Figure 1, ces registres peuvent être utilisés au cours de l'exécution du programme d'interruption. Lors de l'exécution d'instructions de branchement avec liaison, et si la bascule 232 de la Figure 2 est enclenchée, le circuit 240 provoque l'enclenchement des bascules 306, 312 et 316 afin d'indiquer les registres 46, 50, 54 (Figure 1) dans lesquels ont été chargées les informations concernant les instructions de branchement avec liaison.

Lorsqu'une instruction de retour de contrôle est engendrée par le décodeur 18 de la Figure 1, les bascules 306, 312 et 316 (Figure 3) indiquent ceux des registres de liaison 46, 50 et 54 qui sont chargés. Le circuit 240 permet donc d'exécuter un nombre quelconque d'instructions de branchement avec liaison et de retour de contrôle, et de déterminer le nombre de registres 46, 50 et 54 qui sont remplis tant que le nombre d'instructions de branchement avec liaison n'est pas supérieur de trois unités au nombre d'instructions de retour de contrôl. Lorsque le nombre d'instructions de branchement est égal au nombre d'instructions de retour de contrôle, les données initialement emmagasinées dans la mémoire principale 12 avant la réception de la demande d'interruption externe peuvent de nouveau être chargées dans les registres 46, 50 et 54.

L'une des caractéristiques importantes de la présente invention réside dans le fait que les instructions de mise en mémoire du contenue des registres ou de chargement de ces derniers n'ont pas pour effet de provoquer l'enclenchement ou la restauration des bascules 306, 312 et 316 de la Figure 3, qui indiquent ceux des registres 46, 50 et 54 qui sont remplis. Une fois que les bascules 306, 312 et 316 ont été restaurées, l'instruction de retour de contrôle suivante provoque le chargement du contenu du registre d'interruption 170 dans les bascules et dans les registres du processeur 10 dans lesquels les données se trouvaient avant l'interruption. Le processeur 10 reprend alors le traitement au point du programme où l'interruption s'est produite. Lorsque les programmes d'interruption ont été exécutés, les registres 46, 50 et 54 sont de nouveau chargés.

Il ressort de ce qui précède que les registres de liaison utilisés avec la présente invention permettent de mettre en mémoire le contenu des registres auxiliaires lorsque le processeur se trouve dans le mode d'interruption puis de les recharger lorsque le processeur sort du mode d'interruption. Ces registres peuvent être initialisés pour des opérations de branchement avec liaison. Les circuits du dispositif permettent de déterminer la différence entre le nombre d'instructions de branchement avec liaison et d'instructions de retour de contrôle lorsque le processeur se trouve dans le mode d'interruption. Une seule instruction de retour de contrôle est nécessaire pour commander à la fois ces registres et un registre d'interruption.

Les Figures 4 à 7 sont des diagrammes des temps qui illustrent le fonctionnement de la présente invention. On se reportera tout d'abord à la Figure 4 qui représente le cycle de fonctionnement normal d'un processeur du type à appel anticipé des instructions. Par exemple, pendant l'exécution de l'instruction N, on appelle l'instruction N + 1 dans une mémoire, qui peut être analogue à la mémoire principale 12 de la Figure 1. Une fois l'instruction N exécutée, le registre 24 désigne l'instruction N + 2. De même, pendant l'exécution de l'instruction N + 1, on appelle l'instruction N + 2, et après l'exécution de l'instruction N + 1, le registre 24 désignera l'instruction N + 3.

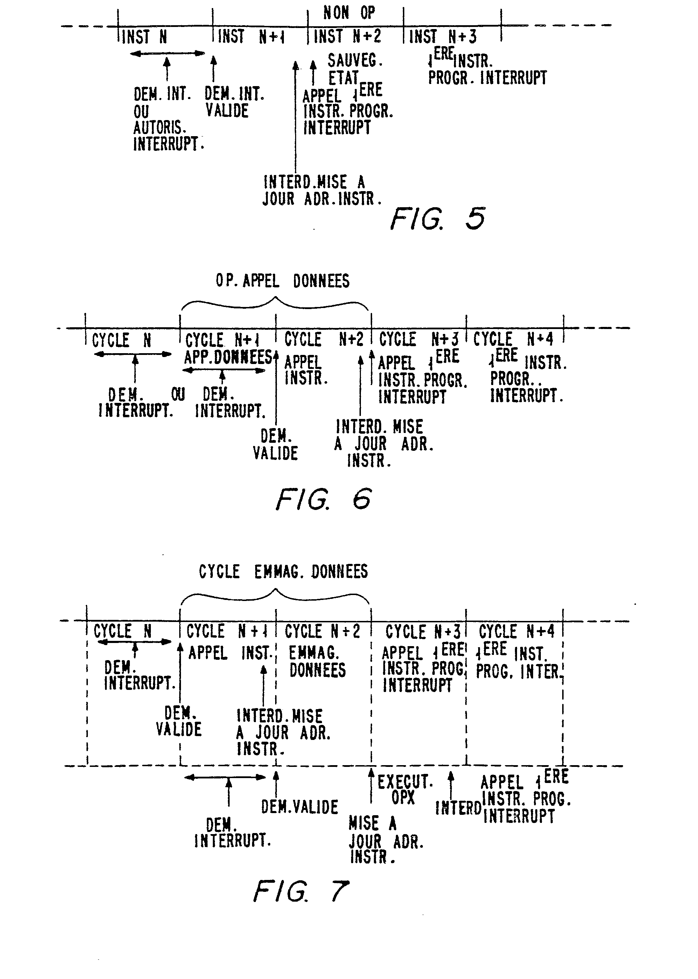

La Figure 5 représente la suite chronologique d'évènements qui se produit lorsqu'une demande d'interruption a été autorisée et qu'une interruption a lieu pendant l'exécution d'une instruction N, ou qu'une demande d'interruption a précédemment été reçue et que l'instruction N est une autorisation d'interruption. La demande d'interruption est reçue par la bascule de demande d'interruption 214 de la Figure 2. Le décodeur 18 de la Figure 1 engendre le signal d'autorisation d'interruption qui doit être appliqué à la bascule d'autorisation d'interruption 212 de la Figure 2 pendant l'exécution de l'instruction N. Le registre d'adresse d'instruction 24 a été mis à la valeur de l'adresse de l'instruction N + 1 que l'on est en train d'appeler dans la mémoire principale 12. Si le processeur 10 se trouve dans l'état d'attente, la sortie du circuit ET 216, lorsque celui-ci reçoit comme entrées la demande d'interruption et la sortie de la bascule 212, provoque la mise en service de l'horloge du dispositif. Le signal de demande d'interruption externe est emmagasiné dans la bascule 214 sous le contrôle de la sortie de l'oscillateur 22 de la Figure 1 pendant chaque cycle du processeur et, comme l'indique la Figure 5, peut apparaître au début de l'instruction N + 1. Le signal de demande valide d'interruption est engendré et emmagasiné dans la bascule de demande valide d'interruption 226. L'instruction N + 1 est alors exécutée, mais la mise à jour du registre 24 à la fin du cycle N + 1 ne peut avoir lieu en raison de l'intervention de la bascule 234 de la Figure 2. Au début du cycle N + 2, l'adresse de la demande d'interruption est transmise à la mémoire principale 12 afin de commencer l'appel de la première instruction du programme d'interruption, cet appel se produisant moins de deux cycles après la réception de la demande d'interruption, ce qui constitue une caractéristique importante de la présente invention dont elle met en relief l'efficacité et la rapidité. D'autre part, pendant le cycle N + 2, les bits d'état de l'unité arithmétique et logique qui sont emmagasinés dans les bascules 120, 122 et 124, de même que le contenu des bascules 162 relatives aux pages et le contenu du registre 24, qui est l'adresse de l'instruction N + 2, sont emmagasinés dans le registre d'interruption 170. D'autre part, l'instruction N + 2 est une instruction dite de non-opération. Pendant le cycle afférent à l'instruction N + 3, la première instruction du programme d'interruption est exécutée.

On se reportera à présent simultanément aux Figures 6 et 7. Si l'instruction N + 1 est une instruction de branchement donnant effectivement lieu à branchement, le contenu du registre d'adresse d'instruction 24 doit être mis à jour à la fin de l'exécution de l'instruction N + 1, l'interruption étant ensuite retardée d'un cycle ou jusqu'à l'exécution d'une instruction de branchement ne donnant pas lieu à branchement ou l'exécution de toute autre instruction. Les instructions de mise en mémoire ou d'appel de données exigent deux cycles puisque deux références à la mémoire sont nécessaires.

Une instruction d'appel de données exige un premier cycle-mémoire pour appeler les données et un deuxième cycle-mémoire pour appeler l'instruction suivante devant être exécutée puisque, dans le dispositif selon l'invention, l'appel des instructions se fait par anticipation. Les données sont appelées d'abord puisqu'elles doivent être inscrites dans la mémoire locale en deux étapes, chacune permettant d'inscrire 4 bits de données. Ceci est effectué pendant que l'instruction suivant est appelée.

Une instruction de mise en mémoire de données provoque d'abord l'appel de l'instruction suivante devant être exécutée. Ceci afin que les deux cycles de lecture en mémoire locale prennent place pour obtenir les données désirées pendant que s'effectue l'appel d'instruction. Une fois que ceci est effectué, les données obtenues à partir de la mémoire locale sont emmagasinées dans la mémoire principale.

Si la bascule d'autorisation d'interruption 212 de la Figure 2 est enclenchée et si une demande d'interruption se produit pendant le cycle qui précède la référence à la mémoire de données, la demande d'interruption est traitée de la façon indiquée sur les Figures 6 et 7, où la première instruction du programme d'interruption est exécutée pendant le cycle N + 4.

Il ressort de ce qui précède que la présente invention offre un dispositif extrêmement rapide dans lequel l'accès à la mémoire aux fins de l'obtention de la première instruction d'une programme d'interruption a lieu 2 à 4 cycles après la génération de la demande d'interruption si celle-ci est autorisée. La présente invention permet la mise en route du traitement si le processeur était en attente ou arrêté. Elle permet d'autre part de sauvegarder toutes les informations afférentes aux pages qui étaient présentes avant la réception d'une demande d'interruption externe et de les remettre à la disposition du processeur à la fin de l'exécution du programme d'interruption. L'invention permet en outre de sauvegarder et restaurer le contenu de toutes les bascules d'état de l'unité arithmétique et logique.

La présente invention permet aussi d'effectuer le chargement et le rechargement des registres de liaison existants pendant que le processeur fonctionne dans le mode d'interruption. Les registres de liaison peuvent être initialisés en vue du transfert d'instructions de branchement avec liaison à des sous-programmes. Les circuits matériels déterminent la différence entre le nombre d'instructions de branchement avec liaison et celui d'instructions de retour de contrôle dans le mode d'interruption. Une unique instruction de retour de contrôle est nécessaire pour commander à la fois les registres de liaison et un registre d'interruption.

**Revendications**

1. Dispositif exécutant des opérations d'interruption de programme dans un système de traitement de données comportant une mémoire (12) permettant d'emmagasiner des données et des instructions, un processeur (10) fonctionnant par cycles d'instructions et pour effectuer les opérations déterminées par les instructions d'un programme, des circuits (140) permettant de traiter les demandes d'interruption en provenance de dispositifs périphériques reçues par le processeur, ledit système fonctionnant dans le mode dit d'appel anticipé des instructions dans lequel une instruction donnée est extraite de la mémoire pendant l'exécution de l'instruction qui la précède dans le programme à exécuter, ledit dispositif comprenant.

un registre d'adresse d'instruction (24) connecté à ladite mémoire et contenant l'adresse de la prochaine l'instruction qui doit faire l'objet d'un appel anticipé dans une suite d'instructions à exécuter;

une registre d'adresse de mémoire (26) couplé audit registre d'adress d'instruction ainsi qu'à la mémoire et destiné à charger l'adresse de la prochaine instruction durant l'exécution de l'instruction en cours;

une première bascule (214) destinée à recevoir et à emmagasiner une demande d'interruption en provenance d'un des dispositifs périphériques;

une seconde bascule (212) connecté à la sortie de la première bascule et à la mémoire et commandée par des instructions de manière à autoriser ou à interdire les demandes d'interruption emmagasinees dans ladite première bascule;

un registre d'interruption (170) pour emmagasiner, lorsqu'une demande d'interruption a été acceptée, l'adresse contenue dans ledit registre d'adresse d'instruction, des informations d'état concernant l'unité arithmetique et logique (82) du processeur ainsi que des informations concernant les pages de données en mémoire et

des moyens de restauration (140, 184) pour restaurer les informations d'état de pages et l'adresse d'instruction en transmettant le contenu dudit registre d'interruption au processeur à la fin de l'exécution des opérations d'interruption de façon à restaurer le processeur dans l'état qu'il avait au moment où l'interruption a été acceptée afin de permettre au processeur de reprendre l'exécution du programme au point où il a été interrompu; ledit dispositif étant caractérisé en ce qu'il comprend:

des registres de liaison (46, 50, 54) connectés au registre d'adresse d'instruction pour emmagasiner les valeurs se trouvant dans ledit registre lorsqu'une demande d'interruption est reçue en provenance d'un des dispositifs périphériques;

des moyens d'interruption (234, 246, 250) couplés auxdites première et seconde bascules afin d'interdire le chargement dans ledit registre d'adresse d'instruction de l'adresse de la prochaine instruction devant faire l'objet d'un appel anticipé, pendant le premier cycle consécutif à la prise en compte d'une demande d'interruption dans ladite première bascule;

des moyens (24) couplés auxdites première et seconde bascules et permettant, en réponse à une opération de branchement donnant lieu à branchement, résultant de instruction se trouvant dans ledit registre d'adresse d'instruction, d'interdire le fonctionnement desdits moyens d'interruption jusqu'à ce que ladite instruction de branchement ait été exécutée; et

des moyens (24) couplés auxdites première et seconde bascules et permettant, en réponse à une opération d'accès à la mémoire, d'interdire le fonctionnement desdits moyens d'interruption jusqu'à la fin de l'exécution de l'opération d'accès en mémoire.

2. Dispositif selon la revendication 1 caractérisé en ce que lesdits moyens d'interruption (234, 246, 250) provoquent l'application d'une adresse d'interruption audit registre d'adresse de mémoire (26) afin d'accéder dans la mémoire à la première instruction du programme d'interruption en vue de son utilisation durant le cycle suivant du processeur (10).

3. Dispositif selon l'une des revendications 1 ou 2, caractérisé en ce qu'il comporte en outre des moyens d'activation permettant de mettre en service l'horloge (20) du processeur lorsqu'une demande d'interruption a été acceptée, alors que le processeur se trouvait dans l'état d'attente.

4. Dispositif selon l'une quelconque des revendications 1 à 3 caractérisé en ce que des instructions de sauvegarde et de restauration sont utilisées pour sauvegarder le contenu dedits registres de liaison (46, 50, 54) en mémoire lorsqu'une demande d'interruption est acceptée, et pour restaurer le contenu dedits registres à la fin de l'exécution des opérations d'interruption pour permettre au processeur (10) de reprendre l'exécution du programme interrompu.

5. Dispositif selon la revendication 4 précédente, caractérisé en ce qu'il comporte en outre:

des moyens de comptage constituées par des bascules (306, 312, 316) enclenchées séquentiellement chaque fois qu'une instruction de branchement avec liaison est exécutée au cours des opérations d'interruption et restaurées séquentiellement chaque fois qu'une instruction de retour de contrôle est exécutée au cours des opérations d'interruption, permettant ainsi de déterminer la différence entre le nombre d'instructions de branchement avec liaison et le nombre d'instructions de retour de contrôle exécutées au cours des opérations d'interruption, cette différence représentant le nombre de registres de liaison (46, 50, 54) contenant une adresse de liaison à sauvegarder,

des moyens de commande (240) connectés aux bascules de comptage delivrant un signal de restauration pour restaurer au processeur (10) l'adresse et les informations sauvegardées, ce signal de restauration permettant également de recharger lesdits registres de liaison avec l'information sauvegardée en mémoire, lesdits moyens de commande étant activés par une instruction de retour de contrôle après que toutes les bascules de comptage aient été restaurées.

6. Dispositif selon l'une quelconque des revendications précédentes, caractérisé en ce que le système de traitement est un microprocesseur.

**Claims**

1. A device for executing program interrupt operations in a data processing system comprising a storage (12) for storing data and instructions, a processor (10) operating in accordance with cycles of instructions and carrying out the operations determined by the instructions of a program, circuits (140) for processing interrupt requests from peripheral devices and received by the processor, said system operating in the mode called instruction anticipated call mode in which a given instruction is extracted from the storage during the execution of the instruction preceding said given instruction in the program to be executed, said device comprising

an instruction address register (24) connected to said storage and containing the address of the next instruction which must be the object of an anticipated call in a series of instructions to be executed,

a storage address register (26) connected to said instruction address register as also to the storage and provided for loading the address of the next instruction while executing the current instruction,

a first latch (214) for receiving and storing an interrupt request from one of the peripheral devices,

a second latch (212) connected to the output of the first latch and to the storage and controlled by instructions so as to authorize or forbid the interrupt requests stored in said first latch,

an interrupt register (170) for storing, when an interrupt request has been accepted, the address contained in said instruction address register, condition information relating to the processor arithmetic and logic unit (82) as well as information relating to the storage data pages and

resetting means (140, 184) for resetting the page condition information and the instruction address by transmitting the contents of said interrupt register to the processor at the end of the execution of the interrupt operations so as to reset the processor into the condition if had when the interrupt was accepted in order to allow the processor to resume the program execution where it was interrupted, said device being characterized in that it comprises:

link registers (46, 50, 54) connected to the instruction address register for storing the values contained in said register when an interrupt request is received from one of the peripheral devices,

interrupt means (234, 246, 250) connected to said first and second latches for inhibiting the loading into said instruction address register, of the address of the reset instruction which should be the object of an anticipated call during the first cycle relating to an interrupt request taken into account in said first latch,

means (24) connected to said first and second latches and in response to a connecting operation comprising a connecting step and resulting from an instruction contained in said instruction address register, for inhibiting the operation of said interrupt means until said connecting operation is executed, and

means (240) connected to said first and second latches and, in response to a storage access operation, for inhibiting the operation of said interrupt means up to the end of the execution of the storage access operation.

2. Device according to claim 1, characterized in that said interrupt means (234, 246, 250) control the application of an interrupt address to said storage address register (26) in order to access to the first instruction of the interrupt program in the memory, for the use thereof for the next cycle of processor (10).

3. Device according to any one of claims 1 or 2, characterized in that it further comprises actuating means for driving the clock (20) of the processor when an interrupt request has been accepted while the processor is in the stand-by condition.

4. Device according to any one of claims 1 to 3 characterized in that save and reset instructions are used to save the contents of said link registers (46, 50, 54) in storage when an interrupt request is accepted and to reset the contents of said registers at the end of the execution of the interrupt operations to allow processor (10) to resume the execution of the interrupted program.

5. Device according to claim 4, characterized in that it further comprises:

counting means comprised of latches (306, 312, 316) sequentially set each time a connecting instruction with a link step is executed during interrupt operations, and sequentially reset each time a control return instruction is executed during interrupt operation, thus allowing to determine the difference between the number of connecting instructions with a link step and the number of control return instructions executed during interrupt operations, said difference representing the number of link registers (46, 50, 54) containing a link address to be saved,

control means (240) connected to the counting latches providing a reset signal for resetting the saved address and information at processor (10), said resetting signal also allowing said link registers to be reloaded with the storage saved information, said control means being activated by a control return information after all the counting latches have been reset.

6. Device according to any one of the above claims, characterized in that the processing system is a microprocessor.

**Patentansprüche**

1. Programmunterbrechungsvorrichtung in einer Datenverarbeitungsanlage, versehen mit einem Speicher (12), der die Speicherung von Daten und Befehlen ermöglicht, mit einem Prozessor (10), der befehlszyklisch arbeitet und zur Ausführung der durch die Befehle eines Programmes bestimmten Operationen vorgesehen ist, mit Schaltkreisen (140), die es ermöglichen, die von Peripheriegeräten kommenden und vom Prozessor aufgenommenen Unterbrechungsanforderungen zu verarbeiten, wobei das genannte System im sogenannten antizipierten Befehlsaufrufbetrieb arbeitet, in welchem ein gegebener Befehl während der Ausführung des ihm im auszuführenden Programm vorangehenden Befehls aus dem Speicher ausgelesen wird, wobei die genannte Vorrichtung enthält

ein Befehlsadressregister (24), das an den genannten Speicher angeschlossen ist und die Adresse des nächsten Befehls enthält, der in einer Folge von auszuführenden Befehlen antizipiert aufgerufen werden soll;

ein Speicheradressregister (26), das an das genannte Befehlsadressregister sowie an den Speicher gekoppelt ist und vorgesehen ist, um die Adresse des nächsten Befehls während der Ausführung des laufenden Befehls zu laden;

eine erste Kippschaltung (214) zur Aufnahme und Speicherung einer aus einem der Peripheriegeräte kommenden Unterbrechungsanforderung;

eine zweite Kippschaltung (212), die an den Ausgang der ersten Kippschaltung und an den Speicher angeschlossen ist und durch Befehle gesteuert wird, um die in der genannten ersten Kippschaltung gespeicherten Unterbrechungsanforderungen zuzulassen oder zu unterbinden;

ein Unterbrechungsregister (170), das, nach Akzeptierung einer Unterbrechungsanforderung, zur Speicherung der im genannten Befehlsadressregister enthalten Adresse und von Statusinformationen über die Rechen- und Logikeinheit (82) sowie von Informationen über die eingespeicherten Datenseiten vorgesehen ist und

Wiederherstellungsmittel (140, 184) zur Wiederherstellung der Seiten-Statusinformationen und der Befehlsadressen durch Übertragung des Inhalts des genannten Unterbrechungsregisters zum Prozessor am Ende der Ausführung der Unterbrechungsoperationen, um den Prozessor in den Zustand zurückzuversetzen, in dem er sich bei der Akzeptierung der Unterbrechung befand, um den Prozessor zu gestatten, die Ausführung des Programmes an dem Punkte wiederaufzunehmen, an dem es unterbrochen wurde; wobei die genannte Vorrichtung dadurch gekennzeichnet ist, dass sie enthält:

Verbindungsregister (46, 50, 54), die an das Befehlsadressregister angeschlossen sind, um die Werte, die sich in dem genannten Register befinden, wenn eine von einem der Peripheriegeräte kommende Unterbrechungsanforderung aufgenommen wird, zu speichern;

Unterbrechungsmittel (234, 246, 250) die an die genannte erste und zweite Kippschaltung gekoppelt sind, um die Ladung der Adresse des nächsten für einen antizipierten Aufruf vorgesehenen Befehls in das genannte Befehlsadressregister zu unterbinden, während des ersten auf die Übernahme einer Unterbrechungsanforderung folgenden Zyklus in der genannten ersten Kippschaltung;

Mittel (240), die an die genannte erste und zweite Kippschaltung gekoppelt sind und es gestatten, als Reaktion auf eine zur Verzweigung führende Verzweigungsoperation, die sich aus dem in dem genannten Befehlsadressregister befindlichen Befehl ergibt, die Funktion der genannten Unterbrechungsmittel zu unterbinden, bis der genannte Verzweigungsbefehl ausgeführt worden ist; und

Mittel (240), die an die genannte erste und zweite Kippschaltung gekoppelt sind und es gestatten, als Reaktion auf eine Speicherzugriffsoperation, die Funktion der genannten Unterbrechungsmittel bis zum Ende der Ausführung der Speicherzugriffsoperation zu unterbinden.

2. Vorrichtung nach Anspruch 1, dadurch gekennzeichnet, dass die genannten Unterbrechungsmittel (234, 246, 250) den Einsatz einer Unterbrechungsadresse bei dem genannten Adress-Speicher (26) hervorrufen, um in dem Speicher Zugriff auf den ersten Befehl des Unterbrechungsprogramms zu haben und denselben während des folgenden Zyklus des Prozessors (10) zu verwenden.

3. Vorrichtung nach einem der Ansprüche 1 oder 2, dadurch gekennzeichnet, dass sie ferner Aktivierungsmittel enthält, welche die Einschaltung des Taktgebers (20) des Prozessors ermöglichen, wenn eine Unterbrechungsanforderung akzeptiert worden ist, während der Prozessor sich im Wartezustand befand.

4. Vorrichtung nach einem der Ansprüche 1 bis 3, dadurch gekennzeichnet, dass Sicherstellungs- und Wiederherstellungsbefehle verwendet werden, um den Inhalt der genannten Verbindungsregister (46, 50, 54) im Speicher sicherzustellen, wenn eine Unterbrechungsanforderung akzeptiert wird und um den Inhalt der genannten Register am Ende de Ausführung der Unterbrechungsoperationen wiederherzustellen, um dem Prozessor (10) die Wiederaufnahme der Ausführung des unterbrochenen Programms zu ermöglichen.

5. Vorrichtung nach dem vorangehenden Anspruch 4, dadurch gekennzeichnet, dass sie ferner enthält:

Aus Kippschaltungen (306, 312, 316) gebildete Zählmittel, die jeweils sequentiell eingeschaltet werden, wenn im Laufe der Unterbrechungsoperationen ein Verzweigungsbefehl mit Verbindung ausgeführt wird und jeweils sequentiell wiederhergestellt werden, wenn im Laufe der Unterbrechungsoperationen ein Kontroll-Rückkehrbefehl ausgeführt wird, wodurch es somit möglich wird, den Unterschied zwischen der Anzahl von Verzweigungsbefehlen mit Verbindung und der Anzahl von Kontroll-Rückkehrbefehlen, die im Laufe der Unterbrechungsoperationen ausgeführt wurden, zu bestimmen, wobei dieser Unterschied die Anzahl von Verbindungsregistern (46, 50, 54) darstellt, die eine sicherzustellende Verbindungsadresse enthalten,

Steuermittel (240), welche an die Zählkippschaltungen angeschlossen sind, die ein Wiederherstellungssignal abgeben, um beim Prozessor (10), die Adresse und die sichergestellten Informationen wiederherzustellen, wobei dieses Wiederherstellungssignal ebenfalls erlaubt, die genannten Verbindungsregister mit der im Speicher sichergestellten Adresse neu zu laden, und wobei die genannten Steuermittel durch einen Kontroll-Rückkehrbefehl aktiviert werden, nachdem alle Zählkippschaltungen wiederhergestellt worden sind.

6. Vorrichtung nach einem der vorangehenden Ansprüche, dadurch gekennzeichnet, dass das Datenerarbeitungssystem ein Mikroprozessor ist.

FIG. 1

FIG. 2

0 020 931

FIG. 3

FIG. 4

NON OP

| INST N | INST N+1 | INST N+2 | INST N+3 |

SAUVEG.
ETAT
APPEL 1ERE
INSTR. PROGR.
INTERRUPT

1ERE INSTR.
PROGR. INTERRUPT

DEM. INT.
OU
AUTORIS.
INTERRUPT.

DEM. INT.
VALIDE

INTERD. MISE A
JOUR ADR. INSTR.

*FIG. 5*

O P. APPEL DONNEES

| CYCLE N | CYCLE N+1 APP. DONNEES | CYCLE N+2 | CYCLE N+3 | CYCLE N+4 |

APPEL
INSTR.

APPEL 1ERE
INSTR. PROGR.
INTERRUPT

1ERE INSTR.
PROGR..
INTERRUPT.

DEM. OU DEM.
INTERRUPT. INTERRUPT.

DEM.
VALIDE

INTERD. MISE
A JOUR ADR.
INSTR.

*FIG. 6*

CYCLE EMMAG. DONNEES

| CYCLE N | CYCLE N+1 | CYCLE N+2 | CYCLE N+3 | CYCLE N+4 |

APPEL INST.

EMMAG.
DONNEES

APPEL 1ERE
INSTR. PROG.
INTERRUPT

1ERE INST.
PROG. INTER.

DEM.
INTERRUPT.

DEM.
VALIDE

INTERD. MISE
A JOUR ADR.
INSTR.

EXECUT.
OPX

APPEL 1ERE
INSTR. PROG.
INTERRUPT

DEM.
INTERRUPT.

DEM. VALIDE

MISE A
JOUR ADR.
INSTR.

INTERD

*FIG. 7*